# EUROPEAN PATENT APPLICATION

(11) **EP 0 575 052 A1**
(43) Date of publication of application: **22.12.1993**
(21) Application number: 93303843.2
(22) Date of filing: 18.05.1993
(51) Int. Cl.: C02F 3/12

(54) **Combined metals and carbonaceous components removal in a biophysical treatment system**

(30) Priority: 19.06.1992 US 901480
(71) Applicant: ZIMPRO ENVIRONMENTAL, INC., Rothschild, Wisconsin 54474 (US)
(72) Inventor: Berrigan, John K., Wausau, Wisconsin 54401 (US); Deets, Timothy A., Wausau, Wisconsin 54401 (US)
(74) Representative: Goodanew, Martin Eric

(57) **Abstract**

A combined metals and carbonaceous component removal process for contaminated wastewater is disclosed in which an iron salt is added to the aeration basin (14) of an aerobic biophysical treatment process which contains biological solids and powdered adsorbent. The iron removes metals contaminants by coprecipitation and the metals precipitate remains with the solids in the system. The biological organisms and powdered adsorbent remove carbonaceous pollutants and the system effluent has a low content of both carbonaceous and metals contaminants.

## Description

The invention relates to a process for removal of both metals and carbonaceous contaminants from a wastewater by a single biophysical treatment system.

Wastewaters containing both carbonaceous (organic) and metals (inorganic) contaminants are frequently encountered. These wastewaters include industrial production wastes and municipal sewage, as well as leachate from landfills and contaminated groundwaters.

Wastewater treatment of these wastes generally requires multiple step processes to remove all the carbonaceous and metals components. Generally a biological or biophysical treatment system is used to remove the carbonaceous contaminants. A particularly useful biophysical system for carbonaceous removal is the PACT® treatment system described in U.S. Patent Nos. 3,904,518 and 4,069,148. The combination of biological treatment and physical adsorption by powdered activated carbon is well known to provide excellent treatment for carbonaceous contaminants.

Since the metals contaminants of the wastewater can be toxic to the biological organisms used for carbonaceous removal, a metals removal step precedes the carbonaceous removal step. Various metals removal systems are employed including precipitation of the metal as insoluble sulfides or hydroxides, electrochemical precipitation on metal electrodes, and coprecipitation with various iron salts.

Hydroxide precipitation requires raising the pH of the wastewater by adding lime or some other alkaline substance and gives a gelatinous metals precipitate. The pH of the wastewater must be adjusted back to near neutral with acid for further biological treatment.

U.S. Patents Nos. 5,013,453 and 5,045,214 disclose removal of metals contaminants with ferrous ions through coprecipitation of the metals by oxidation of ferrous ion to ferric ion which then forms "a substantially completely amorphous precipitate" which removes metals from solution. Iron salts are used in municipal treatment systems for phosphorus precipitation as well.

These multiple treatment steps are costly to perform and put a high cost on treatment of these wastewaters. Applicants have discovered a method for simultaneous removal of both carbonaceous contaminants and metals pollutants in a single treatment process.

The invention provides an aerobic biophysical treatment process, comprising mixing and aerating a carbonaceous pollutant and metals contaminated wastewater with biological solids and powdered adsorbent for a selected time period for carbonaceous pollutant removal, then quiescently settling said wastewater, biological solids and powdered adsorbent to produce a settled solids phase and a treated clarified liquid phase, said liquid phase being discharged from said process, characterised by:
adding a selected amount of a water soluble iron salt to the mixing and aerating of said contaminated wastewater, biological solids and powdered adsorbent, said iron salt reacting to form a precipitate which removes metals from said wastewater, said precipitate remaining with said settled solids phase in the quiescent settling, thereby producing a treated clarified liquid phase for discharge, substantially reduced in metals contaminants.

The biophysical wastewater treatment process may be either a continuous flow system or a batch operated system. The preferred adsorbent is powdered activated carbon. The water soluble iron salt may be either a ferrous or a ferric salt, and the counter ion selected from a group comprising chloride, nitrate, sulfate, carbonate or bicarbonate.

Two embodiments of the process in accordance with the invention will now be described, by way of example only, with reference to the accompanying drawings, in which:
FIGURE 1 is a flow diagram of a continuous flow biophysical system using the invention; and,
FIGURE 2 is a flow diagram of a batch operated biophysical system using the invention.

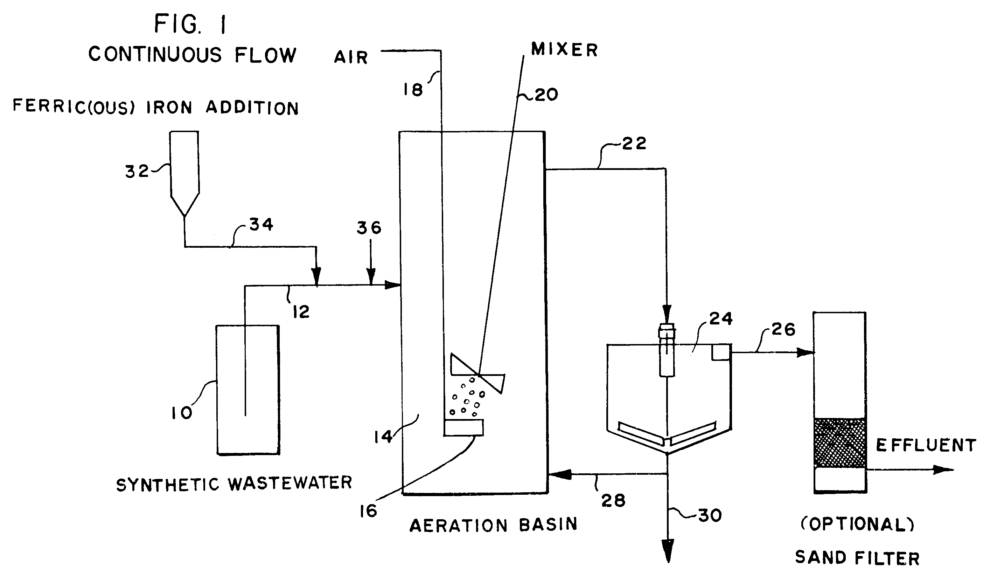

Referring to FIGURE 1, wastewater contaminated with carbonaceous components and metals pollutants, and stored in a reservoir **10**, enters the biophysical treatment system via a conduit **12**, which continuously delivers the wastewater to an aeration zone **14**. The aeration zone **14** contains a mixture of wastewater, biological solids and powdered adsorbent, preferably powdered activated carbon. The basin **14** is aerated and mixed by an aeration means **16**, such as a sparge, supplied with air via a conduit **18**. The carbonaceous pollutants are removed from the wastewater by the metabolism of biological organisms combined with adsorption by the powdered adsorbent. An optional mechanical mixing means **20** provided additional mixing within the aeration zone **14**.

The mixture of wastewater, biological solids and powdered adsorbent then flows via a conduit **22** to a quiescent settling zone or clarifier **24** where solids are settled from treated liquid. A polymer material may be added to said mixture as it enters the clarifier to assist in the settling of solids. The clarified liquid phase discharges from the clarifier **24** via a conduit **26** while the settled solids phase, composed of biological solids and powdered adsorbent, recycles via a return conduit **28** back to the aeration zone **14** to maintain the desired concentration of biological solids and powdered adsorbent therein. Portions of the settled solids phase are sent to waste via a waste conduit **30** to control solids concentration in the biophysical treatment system. Metals contaminants are removed from the wastewater by adding a selected amount of soluble iron salt to the aeration zone of the system. A solution of iron salt from a reservoir 32 is added to the influent wastewater in the conduit **12** via a conduit **34**. Alternatively the iron salt solution may be added directly to the aeration zone **14**.

The iron salt may be either in the ferrous (Fe⁺²) or the ferric (Fe⁺³) form, each with appropriate counter ions, such as chloride, sulfate, nitrate, carbonate or bicarbonate. The dosage of iron salt will depend on the concentration of metals contaminants to be removed from the wastewater. The iron dosage, expressed as iron (Fe), may be as low as about ten times the highest individual metal contaminant concentration, and up to about a thousand times the highest individual metal contaminants concentration. Generally an iron dose of about ten times to about a hundred times the highest individual metal contaminant concentration is sufficient to substantially remove the metals from solution.

Within the aeration zone **14**, any ferrous ions are quickly oxidized to ferric ion by the dissolved oxygen in the wastewater as shown in the following reaction:

2Fe⁺² + ½O₂ + H₂O ---→ 2Fe⁺³ + 2OH⁻

The ferric ions in solution then proceed to form a precipitate in the aeration zone by the following reactions:

2Fe⁺³ + 3H₂O -----→ Fe₂O₃·H₂O↓ + 6H⁺

Fe⁺³ + 3H₂O -----→ Fe(OH)₃·xH₂O↓ + 3H⁺

The iron hydroxide precipitate thus formed removes the majority of the metals contaminants from the wastewater by adsorption onto or occlusion within the iron precipitate. This precipitate is carried with the other suspended solids from the aeration zone **14** to the clarifier **24** where the solids are settled as a solids phase for removal from the wastewater and return to the aeration zone via the return conduit **28**. The coprecipitated metals contaminants are removed from the system in the wasted solids via the waste conduit **30**. Additional powdered adsorbent is added to the system via a conduit **36** to make up for that removed in the wasted solids.

The precipitated metals accumulate in the solids of the aerobic system but, even in high amounts, do not inhibit the biological organisms ability to metabolize the carbonaceous pollutants present. Whether or not the powdered adsorbent has a role in preventing metals toxicity to the biological organisms is not known at this time.

The precipitation reactions shown above for iron produces acid which consumes alkalinity from the wastewater. Generally, for low dosage with iron salts, there is sufficient alkalinity in the wastewater to neutralize the acid formed and maintain a system pH of about 6 to 8, suitable for biological organisms. Should the wastewater contain higher concentrations of metals and require higher dosage of iron salts, addition alkalinity may be added to the system to maintain the aeration basin wastewater in the pH range 6 to 8. The alkalinity may be added as caustic, carbonate or bicarbonate salts. Acidic wastewaters may require alkalinity addition to bring the waste to the desired pH 6 to 8 range prior to entering the biophysical treatment system.

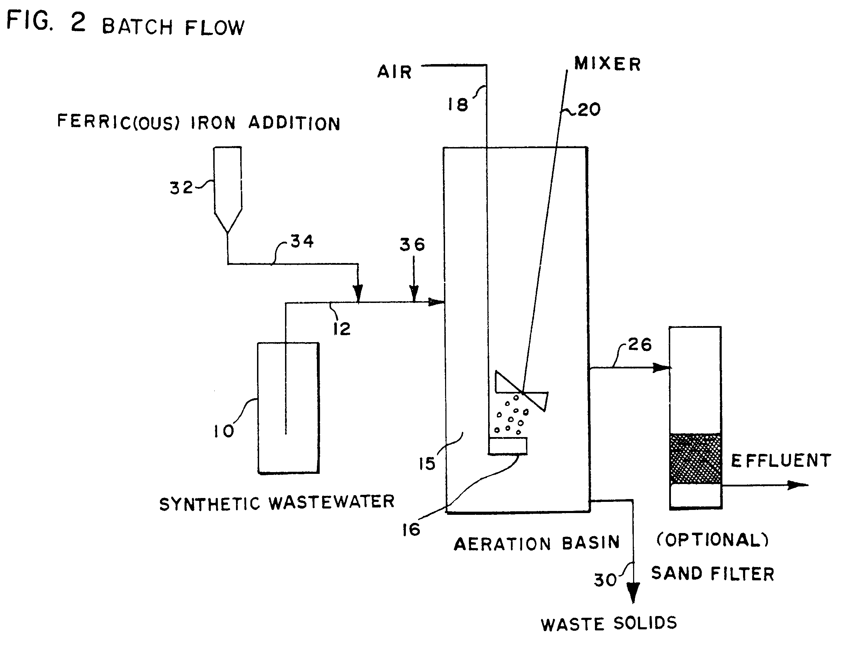

The process of the invention is also applicable to a sequence batch reactor (SBR) operated biophysical wastewater treatment system shown in FIGURE 2. In an SBR system the aerating and mixing step and the quiescent settling step occur in a single zone at separate time intervals. In this mode of operation contaminated wastewater from a storage reservoir **10** enters the biophysical treatment system via a conduit **12**, which intermittently delivers the wastewater to a combined aeration and settling zone, such as a tank **15**. In the SBR mode of operation, the single basin or tank **15** contains the settled solids phase from a previous batch cycle. The influent wastewater fills the tank **15** to a predetermined level, then influent flow ceases. The mixture of wastewater, biological solids and powdered adsorbent, preferably powdered activated carbon, in tank **15** is aerated and mixed by an aeration means **16**, such as a sparge, supplied with air via a conduit **18**. The carbonaceous pollutants are removed from the wastewater by metabolism of biological organisms combined with adsorption by the powdered adsorbent. An optional mechanical mixing means **20** provides additional mixing within the tank **15**.

After a predetermined time period, mixing and aerating cease and separation of the mixture in tank **15** to a clarified liquid phase and a settled solids phase occurs. A polymer material may be added to the mixture to assist in settling the solids. Next the clarified liquid phase is removed from the settled solids phase via a conduit **26**. Finally wastewater influent flow commences to fill the tank **15** to a preselected level for the next batch cycle.

Metals contaminants are removed from the wastewater by adding a selected amount of soluble iron salt to the tank **15** of the SBR system, as was described above. A solution of iron salt from a reservoir **32** is added to the influent wastewater in the conduit **12** via a conduit **34** during the fill cycle. Alternatively the salt solution may be added directly to the tank **15** during the fill cycle.

The coprecipitated metals contaminants remain with the settled solids phase in the tank **15**, and are removed with the excess solids wasted from the system via the waste conduit **30**. Additional powdered adsorbent is added to the system via a conduit **36** to make up for that removed in the wasted solids.

The invention can be understood by considering the following example which illustrates a specific mode of practicing the invention and is not intended to limit the scope of the appended claims.

### EXAMPLE

A continuous flow bench scale biophysical treatment system using powdered activated carbon as the adsorbent was operated without and with iron salt addition for metals removal. The system operated throughout the study with a 24 hour hydraulic detention time (HDT) and a 10 day solids retention time (SRT). The carbon dose for the study was 400 mg/l of influent. The aeration basin mixed liquor suspended solids concentration averaged 11,000 mg/l with about 35% of this being reported as ash. The alkalinity of the influent averaged 176 mg/l as calcium carbonate.

The influent wastewater was municipal primary effluent from a local treatment plant. The feed was spiked with both organic compounds and metals to better asses removals of these components. A solution of ferric chloride was used to dose the influent wastewater with 500 mg/l iron (as Fe) during the second period of the study. The results of the metals analyses are shown in Table 1 for the first period of the study where no iron was added to the influent wastewater. Marginal removals of the ten metals analyzed was observed for the biophysical treatment system.

Table 2 shows the results of influent and effluent metals analyses for the same ten metals in the same system where 500 mg/l of iron was added to the influent wastewater. Removals of all ten metals was extensively improved by iron addition and carbonaceous component removal was not affected compared to the first period of the study conducted without iron addition.

**TABLE 1**

| **Metals Removal Without Iron Addition** | | | |
|---|---|---|---|
| **Metal -- mg/l** | **Influent** | **Effluent** | **% Removal** |
| Aluminum | 1.8 | 1.4 | 22 |
| Arsenic | 1.5 | 0.91 | 39 |
| Cadmium | 1.4 | 0.65 | 54 |
| Chromium | 0.46 | 0.31 | 33 |
| Copper | 2.6 | 0.69 | 73 |
| Lead | <0.090 | <0.075 | 17 |
| Manganese | 3.4 | 2.6 | 24 |
| Nickel | 5.1 | 3.4 | 33 |
| Silver | 0.10 | 0.10 | 0 |
| Zinc | 4.1 | 1.8 | 56 |

**TABLE 2**

| **Metals Removal With 500 mg/l Iron Addition** | | | |
|---|---|---|---|
| **Metal -- mg/l** | **Influent** | **Effluent** | **% Removal** |
| Aluminum | 19 | 0.97 | 95 |
| Arsenic | 2.3 | 0.13 | 94 |
| Cadmium | 3.4 | 0.20 | 94 |
| Chromium | 1.8 | 0.12 | 93 |
| Copper | 5.2 | 0.26 | 95 |
| Lead | 1.5 | <0.060 | 96 |
| Manganese | 6.0 | 1.0 | 82 |
| Nickel | 8.8 | 1.0 | 88 |
| Silver | 0.19 | 0.040 | 79 |
| Zinc | 10.5 | 0.6 | 94 |

## Claims

1. An aerobic biophysical wastewater treatment process comprising mixing and aerating a carbonaceous pollutant and metals contaminated wastewater with biological solids and powdered adsorbent for a selected time period for carbonaceous pollutant removal, then quiescently settling said wastewater, biological solids and powdered adsorbent to produce a settled solids phase and a treated clarified liquid phase, said liquid phase being discharged from said process, characterised by:
adding a selected amount of a water soluble iron salt to the mixing and aerating of said contaminated wastewater, biological solids and powdered adsorbent, said iron salt reacting to form a precipitate which removes metals from said wastewater, said precipitate remaining with said settled solids phase in the quiescent settling, thereby producing a treated clarified liquid phase for discharge, substantially reduced in metals contaminants.

2. A process according to claim 1 wherein said treatment process receives a continuous flow of wastewater and the mixing and aerating step occurs continuously in an aeration zone while the quiescent settling step occurs continuously in a separate clarification zone with the treated wastewater discharged continuously therefrom.

3. A process according to claim 2 wherein addition of water soluble iron salt to the aeration zone is continuous.

4. A process according to claim 2 further comprising recycling said settled solids phase from said clarification zone to said aeration zone to maintain a desired concentration of biological solids and powdered adsorbent in said aeration zone.

5. A process according to claim 1 wherein said treatment process receives an intermittent flow of wastewater and the mixing and aerating step and the quiescent settling step occur in a single zone at separate time intervals with the treated wastewater discharged intermittently therefrom.

6. A process according to claim 5 wherein addition of water soluble iron salt occurs only during the fill step or the mixing and aerating step of the process.

7. A process according to claim 1 further comprising wasting a portion of the settled solids phase from the treatment process to remove precipitated metal contaminants and control solids concentration in the process.

8. A process according to claim 7 further comprising adding fresh powdered adsorbent to the mixing and aerating wastewater to supplement the adsorbent wasted or lost from the treatment system.

9. A process according to any one of the preceding claims wherein said powdered adsorbent is activated carbon.

10. A process according to any one of the preceding claims wherein said selected amount of water soluble iron salt added to the wastewater is about 10 times to about 1,000 times, preferably about 10 times to about 100 times, the highest concentration of individual metal contaminant.

11. A process according to any one of the preceding claims wherein said iron salt comprises a ferrous or a ferric salt.

12. A process according to claim 11 wherein said iron salt is chosen from a group comprising chlorides, nitrates, sulfates, carbonates or bicarbonates.

13. A process according to any one of the preceding claims further comprising adding a polymer to the wastewater, biological solids and powdered adsorbent mixture after the aerating and mixing step to assist in the quiescent settling step.

14. A process according to any one of the preceding claims further comprising adding alkalinity to said wastewater to maintain a pH in the range of 6 to 8.

15. A process according to claim 14 wherein said alkalinity addition is from ammonia, hydroxide, carbonate or bicarbonate salts.
